# EUROPEAN PATENT SPECIFICATION

(11) **EP 2 951 035 B1**
(45) Date of publication and mention of the grant of the patent: **18.09.2019**
(21) Application number: 14703424.3
(22) Date of filing: 13.01.2014
(51) Int. Cl.: B60C 11/16, B60C 11/03, B60C 11/12

(54) **A TYRE FOR VEHICLE WHEELS**
REIFEN FÜR FAHRZEUGRÄDER
PNEU POUR ROUES DE VÉHICULE

(30) Priority: 29.01.2013 IT PD20130018; 07.03.2013 US 201361774095 P
(43) Date of publication of application: 09.12.2015
(73) Proprietor: Pirelli Tyre S.p.A., 20126 Milano (IT)
(72) Inventor: TROMBIN, Andrea, 20126 Milano (IT); MONTESELLO, Stefano, 20126 Milano (IT); SANGALLI, Roberto, 10036 Settimo Torinese (TO) (IT)
(74) Representative: Susanetto, Carlo
(86) International application number: PCT/IB2014/058220
(87) International publication number: WO 2014/118659

(56) References cited:
- EP-A1- 0 609 195
- EP-A1- 0 788 898
- EP-A2- 0 705 719
- GB-A- 2 349 366
- JP-A- 2007 038 924

## Description

The present invention relates to a tyre for vehicle wheels, preferably a winter tyre of the studded type, able to offer a high degree of stability and roadholding performance on the various kinds of road surface on which it may be driven, whether dry, wet, snow-covered or icy.

A tyre generally comprises a carcass structure shaped as a toroid about an axis of rotation, on which a belt structure is applied in a radially outer position and on which a tread band, made from elastomer material on which a tread surface designed to come into contact with the road surface is defined, is further superimposed.

The tread band is typically traversed by grooves, obtained on its surface in a very wide range of configurations, which, together with the blocks which they bound and define, form the overall tread pattern of the tyre.

It is known that the features of the tread band, as it is the tyre component in direct contact with the ground, play a large part in determining the performance of the tyre in terms of roadholding, during both acceleration and braking, and lateral roadholding.

It is known that the roadholding of a tyre on a snow-covered or icy surface is particularly problematic because of the reduced coefficient of friction of the road surface.

In order at least partly to remedy this drawback, widespread use is made of so-called winter tyres characterized by the presence, on the blocks of the tread band, of a plurality of small cuts, known as "sipes", designed to retain a certain quantity of snow on the tread surface which improves roadholding with respect to the snow-covered road surface or, especially in countries with long and harsh winters, so-called studded tyres, i.e. tyres on the tread band thereof metal members, known as "studs", are appropriately secured, which, by projecting by an appropriate extent from the tread surface of the tyre, are able to bear on the icy surface, thus ensuring that the tyre adequately grips this type of road surface as well.

A tyre is defined as "directional" when it is configured to have a preferential direction of rotation, typically coinciding with the direction of rotation of the tyre when mounted on a vehicle in forward movement.

As a result, the tread surface of a directional tyre has a "direction of advancement" tangential to the tread surface and extending in the preferred direction of rotation of the tyre.

The terms "front side" and "rear side", when referring to blocks of a tread band, mean the side of the block facing substantially in the direction of advancement and the side opposite thereto respectively.

The terms "outer side" and "inner side", when referring to a block of a tread band extending along a directrix which identifies a convex surface portion and a concave surface portion on the tread surface, mean the side facing the convex surface portion and the side facing the concave surface portion respectively.

A block is said to "follow" or "precede" another block when it is disposed on the tread band respectively upstream or downstream of the other block with respect to the direction of advancement.

The "equatorial plane" of the tyre means the median axial plane perpendicular to the axis of rotation of said tyre.

The "central region" of the tread band means a region of the tread surface centred on the equatorial plane of the tyre and extending over between about 8% and about 20% of the entire axial dimension (width) of the tread band.

The "shoulder regions" mean the regions of the tread surface extending from the axially opposite ends of the tread band towards the central region, substantially symmetrical with respect to the equatorial plane and each extending over between about 15% and about 35% of the overall width of the tread band.

The "intermediate region" of the tread band means a region of the tread surface interposed between the central region and each shoulder region. Said intermediate regions are therefore substantially symmetrical with respect to the equatorial plane and each extend over between about 10% and about 30% of the overall width of the tread band.

The terms "shoulder blocks", "intermediate blocks" and "central blocks" mean blocks disposed, over at least 80% of their surface area, in a shoulder region, an intermediate region and a central region of the tread band respectively.

A shoulder block and an intermediate block are defined as "corresponding" when they are adjacent and extend substantially continuously with respect to one another in the same longitudinal direction.

A "groove" means a recess obtained on the tread surface and having a minimum width of 1.5 mm and a minimum depth of 5 mm.

The term "cut" means a recess provided in a tread band portion and having a width of between 0.1 and 1.5 mm and a depth of between 1 and 15 mm.

A "sipe" means a cut obtained on a block and designed to retain snow when the tyre is being driven on a snow-covered surface.

A stud is said to be in an "edge position" when it is positioned on a block at less than 8 mm from an edge bounding said block from a groove.

When, however, a stud is positioned on a block at more than 8 mm from an edge bounding said block from a groove, it is said to be in a "middle position".

The "solid/void" ratio of a tread band or of a portion thereof means a characteristic parameter of the tread pattern which expresses the ratio between the overall surface area of the recesses of the tread pattern or a portion thereof and the overall surface area of the tread pattern or a portion thereof.

JP 2002283812 discloses an unstudded winter tyre whose tread band is provided with a plurality of central blocks disposed in sequence along the entire circumferential development of the central region of the tread band and opposite pluralities of shoulder blocks, similarly disposed in sequence along the entire circumferential development of the opposite shoulder regions of the tread band. Between each shoulder block and each central block, there is also provided an intermediate block corresponding thereto. GB 2349366, EP 609195, EP 788898 and JP 2007/038924 disclose additional exemplary winter tyres according to the prior art.

The Applicant has first observed that a winter tyre, especially in countries in which winters are not particularly harsh, may be driven on dry or wet road surfaces.

In this respect, the Applicant has observed that the rigidity of the tread band of winter or studded tyres is relatively low both because of the need to configure the tread pattern so as to provide the tread band with a high deformability when travelling on snow-covered or icy road surfaces, and the need to provide the blocks with sipes to retain the snow.

The Applicant has therefore verified that in wet or dry road surface conditions, the characteristics of rigidity required of the tread band in order to obtain satisfactory performance in terms of lateral roadholding, acceleration and braking differ substantially from those required when it is being driven on snow-covered or icy road surfaces.

The Applicant has perceived that by appropriately configuring the blocks present in the central region of the tread band, it was possible to obtain a tyre able to provide characteristics of rigidity of the tread band such as to obtain adequate roadholding performance on dry or wet road surfaces without substantially impairing overall roadholding on snow-covered or icy surfaces.

The Applicant has finally found that a tyre whose central blocks are configured as a "V", with its concave portion facing alternately towards one or other axial end of the tread band, has characteristics of rigidity such as to effectively improve driving stability on wet or dry surfaces without compromising performance on snow-covered or icy surfaces.

In particular, according to an aspect thereof, the invention relates to a tyre according to claim 1.

The Applicant believes that a tyre having a tread pattern configured in this way has the characteristics of rigidity of the tread band in order to obtain satisfactory performance on dry or wet road surfaces in terms of lateral roadholding, acceleration and braking, while maintaining good performance on snow-covered or icy road surfaces as well.

The present invention, in the above mentioned aspect, may include at least one of the preferred features described below.

Said first central blocks and second central blocks are preferably separated from each other by cuts having a depth of between about 1 mm and about 3 mm.

In this way, a central block is made less mobile with respect to the central blocks adjacent thereto, further increasing rigidity in the central region of the tread band.

In a preferred embodiment of the invention, said first direction and said second direction are symmetrical with respect to an axial direction of said tread band.

The Applicant considers that this configuration of the branches of the central blocks provides an optimum balance between the requirements of traction and braking on straight surfaces and lateral roadholding on bends.

Said first direction and second direction are preferably inclined by an angle of between about 40° and about 80° with respect to an axial direction of said tread band.

Said first direction and second direction are more preferably inclined by an angle of between about 60° with respect to an axial direction of said tread band.

The performance of the tyre on bends is improved in this way, as a gripping edge more or less perpendicular to the direction of advancement is provided.

Said second central blocks are preferably substantially a mirror image of said first central blocks with respect to said equatorial plane.

Said equatorial plane preferably passes through said first central blocks and said second central blocks substantially at respective barycentres.

This provides a configuration which is symmetrical overall and performs in a balanced way.

In a preferred embodiment, said first branch of each of said first central blocks preferably comprises a first end of said first central block defined by a side substantially parallel to said second direction.

Said second branch of each of said first central blocks preferably comprises a second end of said first central block defined by a side substantially parallel to said first direction.

In a preferred embodiment, said first branch of each of said second central blocks comprises a first end of said second central block defined by a side substantially parallel to said first direction.

Said second branch of each of said second central blocks preferably comprises a second end of said second central block defined by a side substantially parallel to said second direction.

In this way, the central region of the tread band offers gripping edges oriented substantially in said two directions, obtaining comparable road performance.

In a preferred embodiment, an end portion of said first branch of each of said first central blocks is adjacent to and axially aligned with an end portion of a second branch of a second central block preceding it.

An end portion of said second branch of each of said first central blocks is preferably adjacent to and axially aligned with an end portion of a first branch of a second central block following it.

These features advantageously make it possible to increase the lateral and longitudinal rigidity of the central region.

In a preferred embodiment, each of said first branch and second branch is bounded laterally by an outer side and by an inner side, respectively facing the convex portion and the concave portion of the central block to which said first and second branches belong, said first central blocks and second central blocks being adjacent to one another at respective outer sides of said first and second branches.

For each of said first central blocks, said inner side of said first branch is preferably substantially aligned with said first end of a second central block following said first central block.

For each of said first central blocks, said inner side of said second branch is preferably substantially aligned with said second end of a second central block preceding said first central block.

For each of said second central blocks, said inner side of said first branch is preferably substantially aligned with said first end of a first central block following said second central block.

For each of said second central blocks, said inner side of said second branch is preferably substantially aligned with said second end of a first central block preceding said second central block.

In a preferred embodiment of the invention, said common end of said first branch and second branch of each of said second central blocks preferably defines a respective vertex of the respective second central block, and the vertices of said second central blocks are substantially aligned in a circumferential direction.

In a more preferred embodiment, said vertices of said second central blocks are substantially aligned in said circumferential direction with the axially external points of said first end and second end of said first central blocks. In this way, the configuration of the central blocks is compact and contained within precise limits of the tread band, providing comparable characteristics within the central region.

Each of said intermediate blocks preferably extends in a longitudinal direction which is substantially continuous with the longitudinal direction in which a corresponding shoulder block extends.

In this way, the gripping action on the road surface is comparable and continuous over a predominant portion of the tread band formed by the shoulder regions and the intermediate regions.

Each intermediate block and said corresponding shoulder block more preferably extend in a curved longitudinal direction which is substantially parallel to said axial direction at said axial end of said tread band.

This provides a shoulder region with high lateral rigidity values which are important in the lateral roadholding of the tyre and, at the same time, an intermediate region able to offer gripping edges on the road surface with a growing inclination with respect to the axial direction so as to provide, in any bend situation, a gripping edge substantially perpendicular to the direction of advancement of the tyre.

Said curved longitudinal direction preferably has its concave portion facing a predetermined direction of advancement of said tyre and is substantially parallel to said first direction or said second direction at a longitudinal end of each of said intermediate blocks opposite said corresponding shoulder block.

In this way, the road behaviour of the tyre is balanced by connecting the intermediate regions with the central region of the tread band in a harmonious way.

In a preferred embodiment, for each of said first central blocks and said second central blocks, there is provided a first intermediate block extending continuously with said first branch of said first central block or second central block.

For each of said first central blocks and said second central blocks, there is more preferably provided a second intermediate block facing an inner side of said second branch of said first central block or second central block.

For each of said first central blocks and said second central blocks, there is even more preferably provided a third intermediate block facing a first branch of a second central block or first central block following said first central block or second central block.

Said intermediate blocks are preferably divided into successive pairs of intermediate blocks and said intermediate blocks of each pair are separated by a groove which has a portion of reduced cross-section.

This feature provides the intermediate region with greater rigidity in terms of both lateral and circumferential rigidity so as better to link the characteristics of rigidity of the shoulder regions, whose rigidity is predominantly lateral, and the central region, whose rigidity is predominantly circumferential. The smaller section of the groove causes lower reciprocal mobility between adjacent intermediate blocks and, as the latter extend in an inclined direction with respect to the axial direction, provides greater rigidity in both this direction and in the circumferential direction perpendicular thereto.

Said tread band preferably is devoid of continuous circumferential grooves. Advantageously, this means that there is never a circumferential section of tread band which has no support on the ground, thereby increasing roadholding on all surfaces, especially in conditions in which there is little roadholding.

In a preferred embodiment, each shoulder block extends from an axial end of said tread band towards said intermediate block in a longitudinal direction and a plurality of sipes extending parallel to said longitudinal direction is provided on each shoulder block.

An axially external portion of said sipes is preferably provided within respective recesses provided on said shoulder block.

The axially inner end portions of said sipes are preferably provided within respective recesses provided on said shoulder block and open along a groove bounding said shoulder block.

In this way, the shoulder blocks are more flexible and deformable at their axially inner ends, increasing their roadholding ability. Said recesses also make it possible to provide a further gripping edge on the road surface and to increase the ability to retain any snow present on said road surface.

Each intermediate block is preferably provided with a plurality of sipes extending in an axial direction.

The axially inner portions of said sipes are preferably provided within respective recesses open along a groove bounding said intermediate block.

This feature makes it possible to obtain a more deformable intermediate block which is therefore better able to bear on the road surface. The recesses are also advantageously provided on the side of the intermediate block not facing in the predetermined direction of advancement of the tyre, such that the rigidity, and therefore the gripping ability, of the edge of the intermediate block directly involved in the advancement of the tyre, remains unchanged.

The end portions of said sipes facing a shoulder block are preferably provided within respective recesses open along a groove separating said intermediate block and said shoulder block.

This makes it possible further to increase the deformability of the tread band at the facing ends of the shoulder block and the corresponding intermediate block.

Each intermediate block is preferably traversed by a transverse cut.

In this way, the deformability of the intermediate block is increased without overly impairing its overall rigidity.

Said transverse cut preferably corresponds axially to a groove separating two adjacent shoulder blocks.

A sipe is more preferably provided in said transverse cut.

Each first central block and second central block is preferably provided with a plurality of sipes extending in an axial direction.

In a preferred embodiment of the invention, the sipes of each first central block and second central block are substantially aligned with the sipes of said intermediate block.

This provides substantial continuity between the extension of the sipes between central blocks and adjacent intermediate blocks, obtaining greater uniformity from the point of view of snow retention.

In a preferred embodiment of the invention, each pair of said shoulder blocks, together with a pair of intermediate blocks corresponding thereto, defines a pitch of said tread band and each pitch is provided with two studs angularly offset from one another less, at most, a pitch defined along the circumferential development of each axial end of said tread band.

This provides the tread band with a substantially uniform distribution of studs.

Each of said pitches is preferably provided with at least one stud in an edge position.

This feature maximizes the gripping ability of the stud on the road surface as it is positioned in the zone of the block which is most readily deformable. In a more preferred manner, when one of said pitches comprises a stud in an edge position and a stud in a middle position, said stud in an edge position is further forward, with reference to a predetermined direction of advancement of the tyre, with respect to the stud in a middle position.

Said tread band preferably has a solid/void ratio of between about 0.25 and about 0.40.

Said tread band preferably has an overall axial dimension of less than about 210 mm.

The Applicant considers that the potential of the tread pattern resulting from the features set out above is best exploited by tyres which are not of an excessive width and are designed for vehicles which are not too heavy. Said first central blocks and said second central blocks preferably extend over an overall axial dimension of between about 8% and about 20% of the overall axial dimension of said tread band.

Said intermediate blocks preferably extend, in each intermediate region, over an overall axial dimension of between about 10% and about 30% of the overall axial dimension of said tread band.

Said shoulder blocks preferably extend, in each shoulder region, over an overall axial dimension of between about 15% and about 35% of the overall axial dimension of said tread band.

The Applicant considers that these proportions of the various regions of the tyre maximize its overall performance.

The features and advantages of the invention will become clear from the following detailed description of a preferred embodiment thereof, given with reference to the appended drawings which are provided purely by way of non-limiting example and in which:
- Fig. 1 is a diagrammatic perspective view of a winter tyre embodied in accordance with the present invention;
- Fig. 2 is a diagrammatic view, developed in a plane, of a significant portion of the tread band of the tyre of Fig. 1.

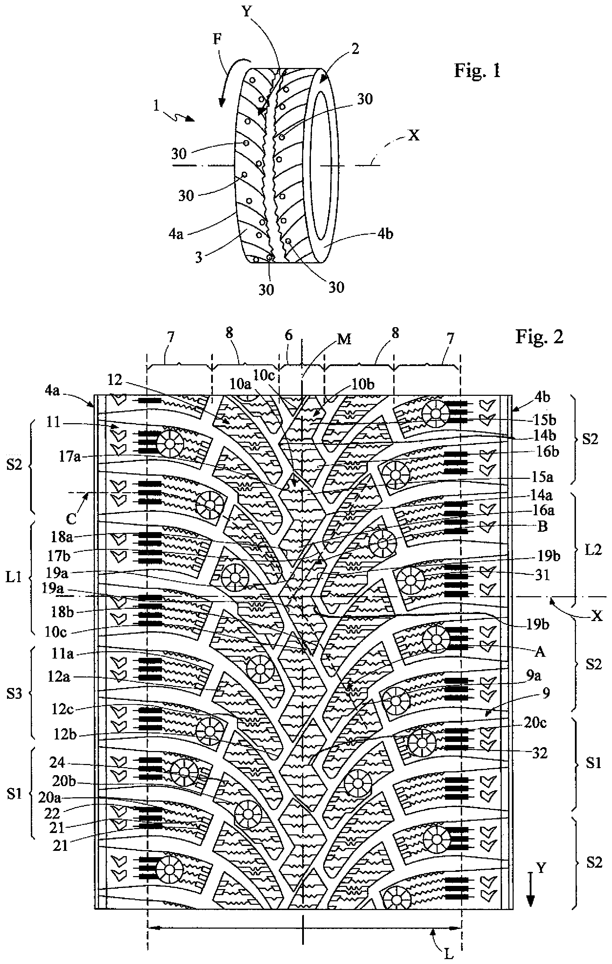

With reference to Figs. 1 and 2, a tyre embodied in accordance with the present invention is shown overall by 1.

The tyre 1 generally comprises a tread band 2, shaped as a toroid about an axis of rotation X of the tyre 1, which is disposed in a radially outer position on a belt structure of the tyre 1. In turn, the belt structure of the tyre 1 is coupled in a radially outer position to a carcass structure, in a configuration known per se in the art and not shown in the appended drawings.

The tread band 2 is made from elastomer material and is provided with a radially outer tread surface 3 designed bring the tyre 1 into contact with the road surface during its rotation about the axis X.

The tyre 1 is preferably of the directional type such that it has a preferential direction of rotation shown by F in Fig. 1. In this way, a direction of advancement Y tangential to the tread surface 3 and oriented in the direction of rotation F is defined for each point of the tread surface 3.

Two opposite axial ends 4a and 4b and an equatorial plane M which divides the tread band 2 into two portions of equal dimensions are defined on the tread band 2.

The tread band 2 also has a central region 6, extending circumferentially in a symmetrical manner with respect to the equatorial plane M, two axially opposite shoulder regions 7, symmetrical with respect to the equatorial plane M and extending from the axial ends 4a and 4b towards the central region 6, and two intermediate regions 8, interposed between the central region 6 and the shoulder regions 7 in a symmetrical manner with respect to the equatorial plane M.

In a preferred embodiment, the tread band 2 has an overall axial dimension (width) L of less than about 210 mm, for instance about 205 mm; the central region 6 has an axial dimension equal to about 12% of the overall axial dimension (width) L of the tread band 2, while the shoulder regions 7 each have an axial dimension equal to about 19% of the width L of the tread band 2 and, therefore, the intermediate regions each have an axial dimension equal to about 25% of the width L of the tread band 2.

The tread band 2 is provided with a plurality of grooves 9 such as to define a plurality of central blocks, disposed in sequence along the circumferential development of the central region 6, a plurality of shoulder blocks 11, disposed in sequence along the circumferential development of the shoulder regions 7, and a plurality of intermediate blocks 12, interposed between the central blocks and the shoulder blocks 11 and disposed in sequence along the circumferential development of the intermediate regions 8.

The tread band 2 preferably does not have continuous circumferential grooves.

The central blocks comprises a plurality of first central blocks 10a and a plurality of second central blocks 10b disposed in alternating sequence along the equatorial plane M.

Each first central block 10a is shaped overall as a V and comprises a first branch and a second branch, shown by 15a and 16a respectively, which are substantially rectilinear and extend from a common end, defining a vertex 14a of the first central block 10a, in a first direction and a second direction shown respectively by A and B.

The first branch 15a and the second branch 16a extend towards the axial end 4a, such that each first central block 10a has its concave portion facing the end and its vertex 14a facing the opposite axial end 4b.

Similarly, each second central block 10b is shaped overall as a V and comprises a first branch and a second branch, shown by 15b and 16b respectively, which are substantially rectilinear and extend from a common end, defining a vertex 14b of the second central block 10b, in the second direction B and the first direction A respectively.

In this way, the first branch 15b and the second branch 16b extend towards the axial end 4b, such that each second central block 10b has its concave portion facing the end and its vertex 14b facing the opposite axial end 4a. The first direction A and second direction B are symmetrical with respect to the axial direction X and are inclined thereto by an angle of about 60°.

The first central blocks 10a and second central blocks 10b are substantially a mirror image with respect to the equatorial plane M, which passes through them substantially at their respective barycentres.

On their longitudinal side opposite their common end, the first branch 15a and the second branch 16a define a first end 17a of the first central block 10a, which is substantially parallel to the second direction B, and, respectively, a second end 18a of the first central block 10a, which is substantially parallel to the first direction A.

Similarly, the first branch 15b and second branch 16b define a first end 17b of the second central block 10b, which is substantially parallel to the first direction A, and, respectively, a second end 18b of the second central block 10b, which is substantially parallel to the second direction B.

Each first branch and second branch of the first central blocks 10a and second central blocks 10b has an outer side 19a and an inner side 19b, respectively facing the convex portion and the concave portion of the central block 10a or 10b to which they belong.

For each first central block, the inner side 19b of the first branch 15a is substantially aligned with the first end 17b of a second central block 10b following the first central block 10a, while the inner side 19b of the second branch 16a is substantially aligned with the second end 18b of a second central block 10b preceding the first central block 10a.

Similarly, for each second central block, the inner side 19b of the first branch 15b is substantially aligned with the first end 17a of a first central block 10a following the second central block 10b, while the inner side 19b of the second branch 16b is substantially aligned with the second end 18a of a first central block 10a preceding the second central block 10b.

The orthogonal projections of the first central blocks 10a and second central blocks 10b on the equatorial plane M are partially superimposed at respective end portions.

In particular, an end portion of the first branch 15a of each first central block 10a is adjacent to and axially aligned with an end portion of a second branch 16b of the second central block 10b preceding the first central block 10a, while an end portion of the second branch 16a of each first central block 10a is adjacent to and axially aligned with an end portion of a first branch 15b of the second central block 10b following the first central block 10a.

In particular, the first central blocks 10a and second central blocks 10b are adjacent to one another at respective outer sides 19a of the respective first and second branches and are separated by cuts 10c preferably having a width of between about 1.5 mm and a depth of about 2 mm.

The vertices 14a of the first central blocks 10a are substantially aligned in a circumferential direction with the axially external points of the first ends 17b and second ends 18b of the second central blocks 10b, while the vertices 14b of the second central blocks 10b are substantially aligned in a circumferential direction with the axially external points of the first ends 17a and second ends 18a of the first central blocks 10a.

Each shoulder block 11 extends in a longitudinal direction C from a respective axial end 4a, 4b of the tread band 2 towards the equatorial plane M.

Each shoulder block 11 has a corresponding intermediate block 12 extending in the same longitudinal direction C substantially continuously with the shoulder block 11. In particular, each intermediate block 12 has a first longitudinal end 12a facing an axially inner longitudinal end 11a of the shoulder block 11, and an opposite second end 12b facing the central blocks 10a, 10b.

The shoulder blocks 11 and corresponding intermediate blocks 12 extend from opposite axial ends 4a, 4b in a substantially symmetrical manner with respect to the equatorial plane M.

The longitudinal direction C has a curved configuration, with its concave portion facing the direction of advancement Y of the tyre, which, at the axial ends 4a, 4b, is substantially parallel to the axial direction X and, at the second end 12b of the intermediate blocks 12, is substantially parallel to the first or second direction A or B.

In particular, the ends 12b of the intermediate blocks 12 closest to the axial end 4a are substantially parallel to the first direction A, while the ends 12b of the intermediate blocks 12 closest to the axial end 4b are substantially parallel to the second direction B.

For each first central block 10a or second central block 10b, there is provided a group of three intermediate blocks 12 and corresponding shoulder blocks 11. In this group, the first intermediate block 12 has its second end 12b facing the first end 17a or 17b respectively of the first central block 10a or second central block 10b, such that it extends substantially continuously with the first branch 15a or 15b; the second intermediate block 12 has its second end 12b facing an inner side 19b of the second branch 16a or 16b respectively of the first central block 10a or the second central block 10b; lastly, the intermediate block 12 faces an outer side 19a of the first branch 15b or 15a respectively of the second central block 10b or first central block 10a following the first central block 10a or second central block 10b.

The intermediate block 12 is traversed by a transverse cut 12c which corresponds axially to a groove 9 separating the shoulder block 11 corresponding to the intermediate block and the following shoulder block 11.

The intermediate blocks 12 may be divided into successive pairs of intermediate blocks and the intermediate blocks 12 of each pair are separated by a groove 9 which has a portion 9a of reduced cross-section. The portion of reduced cross-section 9a preferably extends for about 15 mm, has a depth of about 5 mm and a width of about 2 mm.

With the configuration of grooves and blocks described above, the tread band 2 has, in the footprint area, a solid/void ratio of about 0.33 and, more particularly, a solid/void ratio of about 0.37 at the shoulder region 7, a solid/void ratio of about 0.32 at the intermediate region 8 and solid/void ratio of about 0.29 at the central region 6.

In the preferred embodiment illustrated here, the tyre 1 is a studded winter tyre and each block of the tread band 2 is provided with sipes designed to retain snow.

The sipes may be provided in any appropriate configuration.

The shoulder blocks 11 are provided with sipes 20a extending parallel to the longitudinal direction C and their axially inner end portions are obtained within respective recesses 21 provided at the longitudinal end 11a of the shoulder block 11 and open along a groove 9.

Further recesses 22 bearing respective sections of sipes 20a are also provided on the shoulder blocks 11.

The intermediate blocks 12 are provided with sipes 20b extending substantially parallel to the axial direction X, and their axially inner end portions are obtained within respective recesses 23 open along a groove 9 bounding the intermediate block 12.

The end portions of the sipes 20b open at the first end 12a of the intermediate block 12 and facing a shoulder block 11 are provided within respective recesses 24 open along a groove 9 separating the intermediate block 12 and the shoulder block 11.

A sipe 20b is also provided within the transverse cut 12c.

A plurality of sipes 20c extending substantially parallel to the axial direction X and substantially aligned with the sipes 20b of the intermediate blocks 12 are provided on the central blocks 10a and 10b.

Each pair of shoulder blocks 11, together with a pair of intermediate blocks 12 corresponding thereto, define a pitch of the tread band 2. These pitches are disposed in a variously alternating sequence along the circumferential development of the tread band 2 and comprise two short pitch configurations S1 and S2, having a first circumferential dimension, and two long pitch configurations L1, L2 having a second circumferential dimension greater than the first circumferential dimension.

As mentioned above, the tyre 1 is preferably a studded winter tyre on whose tread band 2 a plurality of studs shown overall by 30 is disposed. The studs 30 may be of any shape able to grip ice and/or compacted and frozen snow.

The short pitch configurations S1 and S2 differ from one another substantially in respect of the arrangement of the studs 30 on the blocks forming them and the same applies to the long pitch configurations L1 and L2.

In the tyre 1, two axially offset studs 30 are provided for each short pitch S1, S2 or long pitch L1, L2 defined on the tread band 2.

Each pitch is provided with at least one stud 31 in an edge position and when the pitch is provided with a stud 31 in an edge position and a stud 32 in a middle position, as in the short pitches S1 and S2, the stud 31 in an edge position is further forward, with reference to the predetermined direction of advancement Y of the tyre, with respect to the stud 32 in a middle position.

A third long pitch or short pitch configuration, not shown in the drawings, may possibly be used once (or a limited number of times) on the tread band 2 to ensure that the tread band 2 is provided with the maximum number of studs laid down by the regulations, without exceeding it. In the preferred embodiment illustrated here, this third configuration is a short pitch S3, shown in Fig. 2, provided with a single stud 31 in an edge position and provided only once (for each axial end) along the circumferential development of the tread band 2.

The tyre 1 is mounted on a vehicle such that during the forward travel of the vehicle it rotates about the axis of rotation X in the preferential direction of rotation F.

The tyre 1, when subjected to the conventional road performance tests by the Applicants, performed optimally on snow-covered or icy road surfaces and also performed well on dry and wet surfaces.

It will be appreciated that a person skilled in the art may further modify and vary the invention in order to meet specific and contingent application requirements, such modifications and variants nevertheless falling within the scope of protection as defined by the following claims.

## Claims

1. A tyre (1) comprising a tread band (2) provided with:
- a plurality of central blocks (10a, 10b) disposed in sequence along an equatorial plane (M) defined on said tread band,
- a plurality of shoulder blocks (11) extending from opposite axial ends of said tread band (2) towards said equatorial plane (M), and
- a plurality of intermediate blocks (12) disposed in sequence along the circumferential development of said tread band (2) between said central blocks and said shoulder blocks,
wherein said plurality of central blocks comprises a plurality of first central blocks (10a) formed by a first branch (15a) and by a second branch (16a) which are rectilinear and extend from a common end in a first direction (A) and a second direction (B) respectively, in order to define a V with its concave portion facing a first axial end (4a) of said tread band, and a plurality of second central blocks (10b) disposed in alternating sequence with said first central blocks and formed by a first branch (15b) and a second branch (16b) which are rectilinear and extend from a common end in said second direction (B) and said first direction (A) respectively, in order to define a V with its concave portion facing a second axial end (4b) of said tread band,
wherein said common end of said first branch (15a) and second branch (16a) of each of said first central blocks (10a) defines a respective vertex (14a) of the respective first central block, and the vertices (14a) of said first central blocks are aligned in a circumferential direction,
**characterised in that** said vertices (14a) of said first central blocks (10a) are aligned in said circumferential direction with an axially external point of a first end (17b) of said first branch (15b) of said second central blocks (10b) and with an axially external point of a second end (18b) of said second branch (16b) of said second central blocks (10b).

2. A tyre according to claim 1, wherein said equatorial plane (M) passes through said first central blocks (10a) and said second central blocks (10b) at respective barycentres.

3. A tyre according to any one of the preceding claims, wherein each of said first branch (15a, 15b) and second branch (16a, 16b) is bounded laterally by an outer side (19a) and by an inner side (19b), respectively facing the convex portion and the concave portion of the central block to which the first and second branches belong, said first central blocks and second central blocks being adjacent to one another at respective outer sides (19a) of said first and second branches.

4. A tyre according to claim 3, wherein, for each of said first central blocks (10a), said inner side (19b) of said first branch (15a) is aligned with said first end (17b) of a second central block (10b) following said first central block.

5. A tyre according to claim 3 or 4, wherein, for each of said first central blocks (10a), said inner side (19b) of said second branch (16a) is aligned with said second end (18b) of a second central block (10b) preceding said first central block.

6. A tyre according to any one of claims 3 to 5, wherein, for each of said second central blocks (10b), said inner side (19b) of said first branch (15b) is aligned with said first end (17a) of a first central block (10a) following said second central block.

7. A tyre according to any one of claims 3 to 6, wherein, for each of said second central blocks (10b), said inner side (19b) of said second branch (16b) is aligned with said second end (18a) of a first central block (10a) preceding said second central block.

8. A tyre according to any one of the preceding claims, wherein said second central blocks (10b) are a mirror image of said first central blocks (10a) with respect to said equatorial plane (M).

9. A tyre according to any one of the preceding claims, wherein said common end of said first branch (15b) and second branch (16b) of each of said second central blocks (10b) defines a respective vertex (14b) of the respective second central block, and the vertices (14b) of said second central blocks are aligned in a circumferential direction with the axially external points of said first end (17a) and second end (18a) of said first central blocks (10a).

10. A tyre according to any one of the preceding claims, wherein, for each of said first central blocks (10a) and said second central blocks (10b), there is provided a first intermediate block (12) extending continuously with said first branch (15a) of said first central block (10a) or second central block (10b) and a second intermediate block (12) facing an inner side (19b) of said second branch (16a; 16b) of said first central block or second central block.

11. A tyre according to any one of the preceding claims, wherein said intermediate blocks (12) are divided into successive pairs of intermediate blocks and said intermediate blocks of each pair are separated by a groove (9) which has a portion of reduced cross-section (9a).

12. A tyre according to any one of the preceding claims, wherein each shoulder block (11) extends from an axial end (4a, 4b) of said tread band towards said intermediate block in a longitudinal direction (C) and a plurality of sipes (20a) extending parallel to said longitudinal direction is provided on each shoulder block, wherein an axially external portion of said sipes (20a) is provided within respective recesses (22) provided on said shoulder block (11) and wherein the axially inner end portions of said sipes (20a) are provided within respective recesses (21) provided on said shoulder block (11), and open along a groove bounding said shoulder block.

13. A tyre according to any one of the preceding claims, wherein each pair of said shoulder blocks (11a, 11b), together with a pair of intermediate blocks (12) corresponding thereto, defines a pitch (S1, S2, L1, L2) of said tread band and each pitch is provided with two studs (31, 32) angularly offset from one another less, at most, a pitch defined along the circumferential development of each axial end of said tread band.

14. A tyre according to claim 13, wherein each of said pitches is provided with at least one stud in an edge position (31).

15. A tyre according to claim 13 or 14, wherein when one of said pitches comprises a stud in an edge position (31) and a stud in a middle position (32), said stud in an edge position (31) is further forward, with reference to a predetermined direction of advancement (Y) of the tyre, with respect to the stud in a middle position (32).

## Patentansprüche

1. Reifen (1), umfassend einen Laufflächenring (2), der versehen ist mit:
- einer Vielzahl von zentralen Blöcken (10a, 10b), die der Reihe nach entlang einer Äquatorialebene (M) angeordnet sind, die an dem Laufflächenring definiert ist,
- einer Vielzahl von Schulterblöcken (11), die sich von entgegengesetzten axialen Enden des Laufflächenrings (2) zu der Äquatorialebene (M) hin erstrecken, und
- eine Vielzahl von Zwischenblöcken (12), die der Reihe nach entlang der Umfangserstreckung des Laufflächenrings (2) zwischen den zentralen Blöcken und den Schulterblöcken angeordnet sind,
wobei die Vielzahl von zentralen Blöcken eine Vielzahl von ersten zentralen Blöcken (10a) umfasst, die durch einen ersten Zweig (15a) und durch einen zweiten Zweig (16a) gebildet werden, die geradlinig sind und sich jeweils von einem gemeinsamen Ende in eine erste Richtung (A) und eine zweite Richtung (B) erstrecken, um ein V zu definieren, dessen konkaver Abschnitt zu einem ersten axialen Ende (4a) des Laufflächenrings weist, sowie eine Vielzahl von zweiten zentralen Blöcken (10b), die in alternierender Abfolge mit den ersten zentralen Blöcken angeordnet sind, und durch einen ersten Zweig (15b) und durch einen zweiten Zweig (16b) gebildet werden, die geradlinig sind und sich jeweils von einem gemeinsamen Ende in die zweite Richtung (B) und die erste Richtung (A) erstrecken, um ein V zu definieren, dessen konkaver Abschnitt zu einem zweiten axialen Ende (4b) des Laufflächenrings weist,
wobei das gemeinsame Ende des ersten Zweigs (15a) und des zweiten Zweigs (16a) eines jeden der ersten zentralen Blöcke (10a) einen jeweiligen Scheitel (14a) des jeweiligen ersten zentralen Blocks definiert, und die Scheitel (14a) der ersten zentralen Blöcke in einer Umfangsrichtung ausgerichtet sind,
**dadurch gekennzeichnet, dass**
die Scheitel (14a) der ersten zentralen Blöcke (10a) in der Umfangsrichtung mit einem axial äußeren Punkt eines ersten Endes (17b) des ersten Zweigs (15b) der zweiten zentralen Blöcke (10b) und mit einem axial äußeren Punkt eines zweiten Endes (18b) des zweiten Zweigs (16b) der zweiten zentralen Blöcke (10b) ausgerichtet sind.

2. Reifen nach Anspruch 1, wobei die Äquatorialebene (M) durch die ersten zentralen Blöcke (10a) und die zweiten zentralen Blöcke (10b) an jeweiligen Schwerpunkten verläuft.

3. Reifen nach einem der vorhergehenden Ansprüche, wobei jeder von dem ersten Zweig (15a, 15b) und dem zweiten Zweig (16a, 16b) seitlich durch eine äußere Seite (19a) und durch eine innere Seite (19b) begrenzt wird, die jeweils zu dem konvexen Abschnitt und dem konkaven Abschnitt des zentralen Blocks hinweisen, zu dem der erste und zweite Zweig gehören, wobei die ersten zentralen Blöcke und die zweiten zentralen Blöcke zueinander an jeweiligen äußeren Seiten (19a) des ersten und zweiten Zweiges benachbart sind.

4. Reifen nach Anspruch 3, wobei für jeden der ersten zentralen Blöcke (10a) die innere Seite (19b) des ersten Zweigs (15a) mit dem ersten Ende (17b) eines zweiten zentralen Blocks (10b), der auf den ersten zentralen Block folgt, ausgerichtet ist.

5. Reifen nach Anspruch 3 oder 4, wobei für jeden der ersten zentralen Blöcke (10a) die innere Seite (19b) des zweiten Zweigs (16a) mit dem zweiten Ende (18b) eines zweiten zentralen Blocks (10b), der dem ersten zentralen Block vorausgeht, ausgerichtet ist.

6. Reifen nach Anspruch 3 bis 5, wobei für jeden der zweiten zentralen Blöcke (10b) die innere Seite (19b) des ersten Zweigs (15b) mit dem ersten Ende (17a) eines ersten zentralen Blocks (10a), der auf den zweiten zentralen Block folgt, ausgerichtet ist.

7. Reifen nach Anspruch 3 bis 6, wobei für jeden der zweiten zentralen Blöcke (10b) die innere Seite (19b) des zweiten Zweigs (16b) mit dem zweiten Ende (18a) eines ersten zentralen Blocks (10a), der dem zweiten zentralen Block vorausgeht, ausgerichtet ist.

8. Reifen nach einem der vorhergehenden Ansprüche, wobei die zweiten zentralen Blöcke (10b) ein Spiegelbild der ersten zentralen Blöcke (10a) in Bezug auf die Äquatorialebene (M) sind.

9. Reifen nach einem der vorhergehenden Ansprüche, wobei das gemeinsame Ende des ersten Zweigs (15b) und des zweiten Zweigs (16b) eines jeden der zweiten zentralen Blöcke (10b) einen jeweiligen Scheitel (14b) des jeweiligen zweiten zentralen Blocks definiert, und die Scheitel (14b) der zweiten zentralen Blöcke in einer Umfangsrichtung mit den axial äußeren Punkten des ersten Endes (17a) und des zweiten Endes (18a) der ersten zentralen Blöcke (10a) ausgerichtet sind.

10. Reifen nach einem der vorhergehenden Ansprüche, wobei für jeden der ersten zentralen Blöcke (10a) und der zweiten zentralen Blöcke (10b) ein erster Zwischenblock (12) vorgesehen ist, der sich durchgehend mit dem ersten Zweig (15a) des ersten zentralen Blocks (10a) oder des zweiten zentralen Blocks (10b) erstreckt, und einen zweiten Zwischenblock (12), der zu einer inneren Seite (19b) des zweiten Zweigs (16a; 16b) des ersten zentralen Blocks oder des zweiten zentralen Blocks hin weist.

11. Reifen nach einem der vorhergehenden Ansprüche, wobei die Zwischenblöcke (12) in aufeinanderfolgende Paare von Zwischenblöcken unterteilt sind, und die Zwischenblöcke eines jeden Paars durch eine Nut (9) getrennt sind, die einen Abschnitt mit verringertem Querschnitt (9a) aufweist.

12. Reifen nach einem der vorhergehenden Ansprüche, wobei jeder Schulterblock (11) sich von einem axialen Ende (4a, 4b) des Laufflächenrings zu dem Zwischenblock in einer Längsrichtung (C) erstreckt, und eine Vielzahl von Lamellen (20a), die sich parallel zu der Längsrichtung erstrecken, an jedem Schulterblock vorgesehen ist, wobei ein axial äußerer Abschnitt der Lamellen (20a) innerhalb jeweiliger Vertiefungen (22) vorgesehen ist, die an dem Schulterblock (11) vorgesehen sind, und wobei die axial inneren Endabschnitte der Lamellen (20a) innerhalb jeweiliger Vertiefungen (21) vorgesehen sind, die an dem Schulterblock (11) vorgesehen sind, und sich entlang einer Nut öffnen, die den Schulterblock begrenzt.

13. Reifen nach einem der vorhergehenden Ansprüche, wobei jedes Paar von Schulterblöcken (11a, 11b) zusammen mit einem ihm entsprechenden Paar von Zwischenblöcken (12) eine Teilung (S1, S2, L1, L2) des Laufflächenrings definiert, und jede Teilung mit zwei Spikes (31, 32) versehen ist, die winkelmäßig zueinander um weniger als höchstens eine Teilung versetzt sind, die entlang der Umfangserstreckung eines jeden axialen Endes des Laufflächenrings definiert wird.

14. Reifen nach Anspruch 13, wobei jede der Teilungen mit zumindest einem Spike in einer Randposition (31) versehen ist.

15. Reifen nach Anspruch 13 oder 14, wobei, wenn eine der Teilungen einen Spike in einer Randposition (31) und einen Spike in einer mittleren Position (32) umfasst, der Spike in einer Randposition (31) in Bezug auf eine vorbestimmte Vorschubrichtung (Y) des Reifens relativ zu dem Spike in einer mittleren Position (32) weiter vorne liegt.

## Revendications

1. Pneu (1) comprenant une bande de roulement (2) comportant :
- une pluralité de blocs centraux (10a, 10b) disposés en séquence le long d'un plan équatorial (M) défini sur ladite bande de roulement,
- une pluralité de blocs d'épaulement (11) s'étendant à partir d'extrémités axiales opposées de ladite bande de roulement (2) vers ledit plan équatorial (M), et
- une pluralité de blocs intermédiaires (12) disposés en séquence le long du développement circonférentiel de ladite bande de roulement (2) entre lesdits blocs centraux et lesdits blocs d'épaulement,
dans lequel ladite pluralité de blocs centraux comprend une pluralité de premiers blocs centraux (10a) formés par une première branche (15a) et par une deuxième branche (16a) qui sont rectilignes et s'étendent à partir d'une extrémité commune dans une première direction (A) et une deuxième direction (B) respectivement, afin de définir un V avec sa partie concave faisant face à une première extrémité axiale (4a) de ladite bande de roulement, et une pluralité de deuxièmes blocs centraux (10b) disposés en séquence alternée avec lesdits premiers blocs centraux et formés par une première branche (15b) et une deuxième branche (16b) qui sont rectilignes et s'étendent à partir d'une extrémité commune dans ladite deuxième direction (B) et ladite première direction (A) respectivement, afin de définir un V avec sa partie concave faisant face à une deuxième extrémité axiale (4b) de ladite bande de roulement,
dans lequel
ladite extrémité commune desdites première branche (15a) et deuxième branche (16a) de chacun desdits premiers blocs centraux (10a) définit un sommet respectif (14a) du premier bloc central respectif, et les sommets (14a) desdits premiers blocs centraux sont alignés dans une direction circonférentielle
**caractérisé en ce que**
lesdits sommets (14a) desdits premiers blocs centraux (10a) sont alignés dans ladite direction circonférentielle avec un point axialement externe d'une première extrémité (17b) de ladite première branche (15b) desdits deuxièmes blocs centraux (10b) et avec un point axialement externe d'une deuxième extrémité (18b) de ladite deuxième branche (16b) desdits deuxièmes blocs centraux (10b).

2. Pneu selon la revendication 1, dans lequel ledit plan équatorial (M) traverse lesdits premiers blocs centraux (10a) et lesdits deuxièmes blocs centraux (10b) à des barycentres respectifs.

3. Pneu selon l'une quelconque des revendications précédentes, dans lequel chacune desdites première branche (15a, 15b) et deuxième branche (16a, 16b) est délimitée latéralement par un côté externe (19a) et par un côté interne (19b), faisant face respectivement à la partie convexe et à la partie concave du bloc central auquel appartiennent les première et deuxième branches, lesdits premiers blocs centraux et deuxièmes blocs centraux étant adjacents les uns aux autres au niveau de côtés externes respectifs (19a) desdites première et deuxième branches.

4. Pneu selon la revendication 3, dans lequel, pour chacun desdits premiers blocs centraux (10a), ledit côté interne (19b) de ladite première branche (15a) est aligné avec ladite première extrémité (17b) d'un deuxième bloc central (10b) suivant ledit premier bloc central.

5. Pneu selon la revendication 3 ou 4, dans lequel, pour chacun desdits premiers blocs centraux (10a), ledit côté interne (19b) de ladite deuxième branche (16a) est aligné avec ladite deuxième extrémité (18b) d'un deuxième bloc central (10b) précédant ledit premier bloc central.

6. Pneu selon l'une quelconque des revendications 3 à 5, dans lequel, pour chacun desdits deuxièmes blocs centraux (10b), ledit côté interne (19b) de ladite première branche (15b) est aligné avec ladite première extrémité (17a) d'un premier bloc central (10a) suivant ledit deuxième bloc central.

7. Pneu selon l'une quelconque des revendications 3 à 6, dans lequel, pour chacun desdits deuxièmes blocs centraux (10b), ledit côté interne (19b) de ladite deuxième branche (16b) est aligné avec ladite deuxième extrémité (18a) d'un premier bloc central (10a) précédant ledit deuxième bloc central.

8. Pneu selon l'une quelconque des revendications précédentes, dans lequel lesdits deuxièmes blocs centraux (10b) sont une image miroir desdits premiers blocs centraux (10a) par rapport audit plan équatorial (M).

9. Pneu selon l'une quelconque des revendications précédentes, dans lequel ladite extrémité commune desdites première branche (15b) et deuxième branche (16b) de chacun desdits deuxièmes blocs centraux (10b) définit un sommet respectif (14b) du deuxième bloc central respectif, et les sommets (14b) desdits deuxièmes blocs centraux sont alignés dans une direction circonférentielle avec les points axialement externes desdites première extrémité (17a) et deuxième extrémité (18a) desdits premiers blocs centraux (10a) .

10. Pneu selon l'une quelconque des revendications précédentes, dans lequel, pour chacun desdits premiers blocs centraux (10a) et desdits deuxièmes blocs centraux (10b), il est prévu un premier bloc intermédiaire (12) s'étendant en continu avec ladite première branche (15a) dudit premier bloc central (10a) ou dudit deuxième bloc central (10b) et un deuxième bloc intermédiaire (12) faisant face à un côté interne (19b) de ladite deuxième branche (16a ; 16b) dudit premier bloc central ou dudit deuxième bloc central.

11. Pneu selon l'une quelconque des revendications précédentes, dans lequel lesdits blocs intermédiaires (12) sont divisés en paires successives de blocs intermédiaires et lesdits blocs intermédiaires de chaque paire sont séparés par une rainure (9) qui a une partie de section transversale réduite (9a).

12. Pneu selon l'une quelconque des revendications précédentes, dans lequel chaque bloc d'épaulement (11) s'étend d'une extrémité axiale (4a, 4b) de ladite bande de roulement vers ledit bloc intermédiaire dans une direction longitudinale (C) et une pluralité de lamelles (20a) s'étendant parallèlement à ladite direction longitudinale est prévue sur chaque bloc d'épaulement, dans lequel une partie axialement externe desdites lamelles (20a) est prévue à l'intérieur d'évidements respectifs (22) prévus sur ledit bloc d'épaulement (11) et dans lequel les parties d'extrémité axialement internes desdites lamelles (20a) sont prévues à l'intérieur d'évidements respectifs (21) prévus sur ledit bloc d'épaulement (11), et ouverts le long d'une rainure délimitant ledit bloc d'épaulement.

13. Pneu selon l'une quelconque des revendications précédentes, dans lequel chaque paire desdits blocs d'épaulement (11a, 11b), conjointement avec une paire de blocs intermédiaires (12) correspondant à celle-ci, définit un pas (S1, S2, L1, L2) de ladite bande de roulement et chaque pas est pourvu de deux crampons (31, 32) décalés angulairement l'un par rapport à l'autre moins, au plus, un pas défini le long du développement circonférentiel de chaque extrémité axiale de ladite bande de roulement.

14. Pneu selon la revendication 13, dans lequel chacun desdits pas est pourvu d'au moins un crampon dans une position de bord (31).

15. Pneu selon la revendication 13 ou 14, dans lequel, lorsque l'un desdits pas comprend un crampon dans une position de bord (31) et un crampon dans une position médiane (32), ledit crampon dans une position de bord (31) est plus en avant, en référence à une direction d'avancement prédéterminée (Y) du pneu, par rapport au crampon dans une position médiane (32).
